# EUROPEAN PATENT APPLICATION

(11) **EP 4 521 627 A1**
(43) Date of publication of application: **12.03.2025**
(21) Application number: 24196009.5
(22) Date of filing: 22.08.2024
(51) Int. Cl.: H02P 9/48

(54) **DATA-ENABLED AIRCRAFT GENERATOR**

(30) Priority: 06.09.2023 US 202318461622
(71) Applicant: Hamilton Sundstrand Corporation, Charlotte, NC 28217-4578 (US)
(72) Inventor: PETERSON, Paul J., Rockford, IL (US)
(74) Representative: Dehns

(57) **Abstract**

A data-enabled aircraft generator module includes a generator and a generator memory unit (112). The generator is configured to power an aircraft based at least in part on at least one control signal output from a generator control unit (GCU (102)). The generator memory unit (112) configured to exchange data with the GCU (102).

## Description

### TECHNICAL FIELD

The present invention relates generally to aircraft systems, and more particularly, to aircraft generators.

### BACKGROUND

Aircraft electric generators are typically controlled by a hardware controller often referred to as a generator control unit (GCU). The GCU controls parameters of the generator such as, for example, generator output voltage, the output frequency (if necessary), and operates with other components to apply or remove the output power to or from aircraft electrical network, respectively. However, troubleshooting electrical faults occurring in the generator can be challenging because the GCU lacks the relevant fault information in the context of which specific generator it is connected to.

### SUMMARY

According to a non-limiting embodiment, a data-enabled aircraft generator module includes a generator and a generator memory unit. The generator is configured to power an aircraft based at least in part on at least one control signal output from a generator control unit (GCU). The generator memory unit configured to exchange data with the GCU.

In addition to one or more of the features described above, or as an alternative to any of the foregoing embodiments, the generator memory unit includes one or both of non-volatile memory (NVM) and Static Random-Access Memory (SRAM).

In addition to one or more of the features described above, or as an alternative to any of the foregoing embodiments, the data-enabled aircraft generator module further includes a memory interface in signal communication with the generator memory unit, the memory interface configured to establish a data communication connection between the generator memory unit and the GCU to exchange the data.

In addition to one or more of the features described above, or as an alternative to any of the foregoing embodiments, the generator memory unit is configured to store performance metrics output from the GCU during a flight of the aircraft.

In addition to one or more of the features described above, or as an alternative to any of the foregoing embodiments, the generator memory unit is configured to store fault data output from the GCU, the fault data indicative of at least one fault occurring in the generator.

In addition to one or more of the features described above, or as an alternative to any of the foregoing embodiments, at least one fault includes, but is not limited to, one or a combination of an overvoltage fault, an undervoltage fault, a short-circuit fault, an open-circuit fault, an overheating event, a rotor/stator imbalance, bearing wear, a phase imbalance, a frequency imbalance, and a voltage regulator failure.

In addition to one or more of the features described above, or as an alternative to any of the foregoing embodiments, the generator memory unit is configured to store aircraft identification data output from the GCU.

In addition to one or more of the features described above, or as an alternative to any of the foregoing embodiments, the data-enabled aircraft generator module further includes at least one sensor configured to output at least one signal indicative of at least one measured parameter corresponding to the generator.

In addition to one or more of the features described above, or as an alternative to any of the foregoing embodiments, at least one measured parameter includes at least one of voltage level output, current level output, voltage output frequency, voltage output phase, component temperatures, fluid temperatures, load ratings, and rotational speed.

In addition to one or more of the features described above, or as an alternative to any of the foregoing embodiments, the memory interface is configured to establish a diagnostic data communication connection between the generator memory unit and a mobile diagnostic tool.

In addition to one or more of the features described above, or as an alternative to any of the foregoing embodiments, the generator memory unit is configured to output one or a combination of the performance metrics, the fault data, and the aircraft identification data to the mobile diagnostic tool.

In addition to one or more of the features described above, or as an alternative to any of the foregoing embodiments, the generator memory unit is configured to store maintenance data received from the mobile diagnostic tool.

In addition to one or more of the features described above, or as an alternative to any of the foregoing embodiments, the maintenance data includes one or a combination of generator identification information, generator production information, maintenance work data, maintenance date and time information, and historical diagnostic data.

According to another non-limiting embodiment, an aircraft comprises a generator control unit (GCU) and a data-enabled aircraft generator module. The GCU is configured to output at least one control signal. The data-enabled aircraft generator module includes a generator and a generator memory unit. The generator is configured to power the aircraft based at least in part on at least one control signal. The generator memory unit is in signal communication with the GCU and is configured to exchange data with the GCU.

In addition to one or more of the features described above, or as an alternative to any of the foregoing embodiments, the generator memory unit includes one or both of non-volatile memory (NVM) and Static Random-Access Memory (SRAM).

In addition to one or more of the features described above, or as an alternative to any of the foregoing embodiments, the GCU is configured to determine at least one performance metric of the aircraft and to store the at least one performance metric in the generator memory unit.

In addition to one or more of the features described above, or as an alternative to any of the foregoing embodiments, the GCU is configured to generate fault data indicative of at least one fault occurring in the generator and is configured to store the fault data in the generator memory unit.

In addition to one or more of the features described above, or as an alternative to any of the foregoing embodiments, the GCU is configured to store aircraft identification data associated with the aircraft in the generator memory unit.

In addition to one or more of the features described above, or as an alternative to any of the foregoing embodiments, the aircraft further comprises at least one sensor in signal communication with the GCU.

In addition to one or more of the features described above, or as an alternative to any of the foregoing embodiments, at least one sensor is configured to output at least one signal indicative of at least one measured parameter corresponding to the generator, and wherein the GCU is configured to store the at least one measured parameter in the generator memory unit.

According to yet another non-limiting embodiment, a method of exchanging data using a data-enabled aircraft generator module is provided. The method comprises outputting, by a generator control unit (GCU), at least one control signal; and generating electrical power from a generator included in the data-enabled aircraft generator module based at least in part on the at least one control signal. The method further comprises generating fault data indicative of at least one fault occurring in the generator; and storing the fault data in a generator memory unit installed locally in the data-enabled aircraft generator module.

### BRIEF DESCRIPTION OF THE DRAWINGS

FIG. 1 is a block diagram illustrating a data-enabled aircraft generator in signal communication with a GCU according to a non-limiting embodiment of the present disclosure;
FIG. 2 is a block diagram illustrating the data-enabled aircraft generator in signal communication with a diagnostic tool according to a non-limiting embodiment of the present disclosure; and
FIG. 3 is a flow diagram illustrating a method of exchanging data using a data-enabled aircraft generator module according to a non-limiting embodiment of the present disclosure.

### DETAILED DESCRIPTION

For the purposes of promoting and understanding the principles of the present disclosure, reference will now be made to the embodiments illustrated in the drawings, and specific language will be used to describe the same. It should nevertheless be understood that no limitation of the scope of this disclosure is thereby intended. The following description is merely illustrative in nature and is not intended to limit the present disclosure, its application or uses. It should be understood that throughout the drawings, corresponding reference numerals indicate like or corresponding parts and features.

The terms "at least one" and "one or more" are understood to include any integer number greater than or equal to one, i.e., one, two, three, four, etc. The terms "a plurality" are understood to include any integer number greater than or equal to two, i.e., two, three, four, five, etc. The term "connection" can include an indirect "connection" and/or a direct "connection" unless specified to the contrary in the claims below.

As used herein, the term "controller" or "processor" refers to processing circuitry, which may include an application specific integrated circuit (ASIC), an electronic circuit, a hardware controller, an electronic processor (shared, dedicated, or group) and memory that executes one or more software or firmware programs, a combinational logic circuit, and/or other suitable interfaces and components that provide the described functionality.

Turning now to a general overview of the relevant technologies, traditional aircraft generators do not include a local memory unit. Therefore, the generator cannot store fault information associated with an electrical fault that occurs in the generator. The lack of fault information can cause difficulties troubleshooting a faulty generator, and in turn can reduce field repair work efficiency.

Various non-limiting embodiments of the present disclosure solve the short-comings of a traditional generator by providing a data-enabled aircraft generator capable of supplying fault information pertaining to an electrical fault associated with the generator. The data-enabled aircraft generator includes a memory unit, which can be accessed by the GCU to exchange data (e.g., read and/or write). For example, GCU can detect the occurrence of a fault in the generator and store information indicative of the fault in the generator memory unit. Accordingly, a maintenance technician can service the generator remotely from the GCU and the aircraft, but still obtain information pertaining to the fault from the generator memory unit.

According to a non-limiting embodiment, the GCU can also store identification (ID) information (e.g., part numbers and/or serial numbers) in the generator memory unit, which correlates the GCU to a particular data-enabled aircraft generator. In this manner, field maintenance service experiences can be improved because a maintenance technician can obtain the stored ID information from the generator memory unit to easily correlate the generator under repair with its corresponding GCU and/or aircraft. The GCU is capable of providing performance metrics to the generator memory unit on a per-flight basis, which may allow a maintenance technician to determine the reason for a particular fault occurring in the generator.

In a non-limiting embodiment, the generator memory unit can serve as a digital-logbook when performing maintenance work on the data-enabled aircraft generator. In addition, data from on-wing events written into the generator memory unit by the GCU can also trigger additional repair actions as needed. The generator memory unit can also be accessed using a mobile terminal or diagnostic tool, which allows a maintenance technician to store test and diagnostic data from a maintenance visit. Previous maintenance visits can then be retrieved from the generator memory unit during subsequent maintenance visits to eliminate or reduce records searching. Accordingly, the data-enabled aircraft generator described herein provides increased visibility into the operation/performance of the generator, which in turn facilitates improved efficiency in field service support and a reduction in workload associated with repair returns.

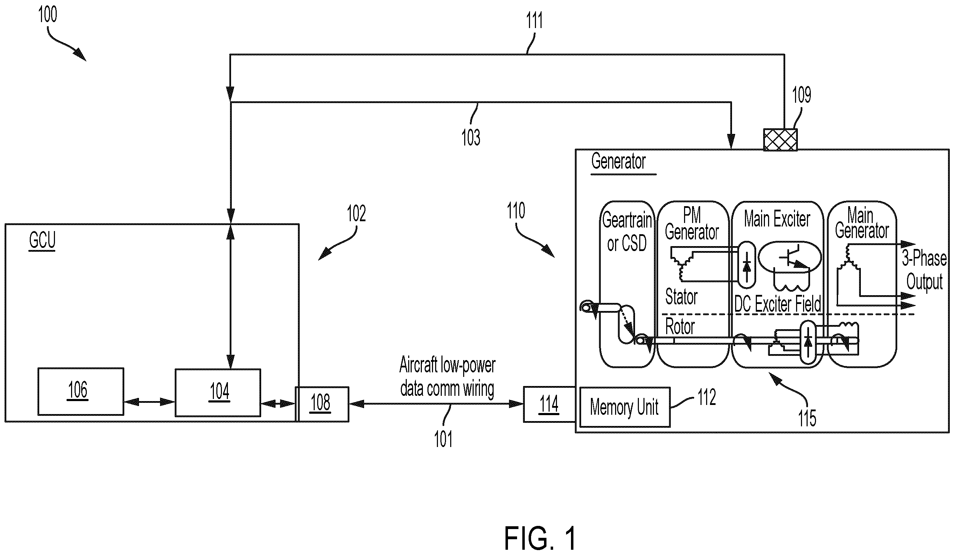

Turning now to FIG. 1, a data-enabled aircraft generator module 110 is illustrated according to a non-limiting embodiment. The data-enabled aircraft generator module 110 is illustrated as being installed in an aircraft 100 and in signal communication with a generator control unit (GCU) 102. The data-enabled aircraft generator module 110 includes a generator 115, which is a machine that converts mechanical energy from the aircraft's engines into electrical energy, which is then distributed to power avionics, lights, pumps, and other critical systems of the aircraft 100. The data-enabled aircraft generator module 110 includes an input shaft that is connected to the engine's accessory gearbox. This input shaft is connected to an internal gear-train or constant speed drive, whose output is in turn connected to the generator rotor. The data-enabled aircraft generator module 110 also includes a stator containing coils of wire. As the rotor spins within the stator's magnetic field, it induces a current in the coils, generating the necessary electrical power to meet the electrical demands of the aircraft 100. Although a three-stage permanent magnet (PM) synchronous generator 115 is shown, it should be appreciated that other types of generators can be employed without departing from the teachings of the present disclosure.

The data-enabled aircraft generator module 110 also includes various electronics such as, for example, sensors 109, and protective systems (not shown). The sensors 109 provide data and information for provided feedback control to the GCU for the voltage regulator and/or protective functions. For example, one or more sensors 109 can output signals 111 indicative of various measured parameters including, but not limited to, voltage level output, current level output, voltage output frequency, voltage output phase, component temperatures, fluid temperatures, load ratings and rotational speed. The voltage regulator function within the GCU 102, maintains a target output voltage to ensure the stability of the electrical supply provided by the data-enabled aircraft generator module 110. The protective systems monitor parameters like temperature, voltage and current, safeguarding the data-enabled aircraft generator module 110.

According to a non-limiting embodiment, the data-enabled aircraft generator module 110 further includes a local generator memory unit 112. The generator memory unit 112 includes non-volatile memory (NVM) or static random access memory (SRAM) having a storage capacity ranging, for example, from about 4 megabytes (MB) to 5 terabytes (TB), and in some embodiments 4 MB to 8 gigabytes (GB). In one or more non-limiting embodiments, the generator memory unit 112 can store identification (ID) information associated with the data-enabled aircraft generator module 110 including, but not limited to, part numbers and serial numbers. A memory interface 114 allows the GCU to access the generator memory unit 112 as described in greater detail below.

The GCU 102 includes a hardware processor 104 and a controller memory unit 106. The controller memory unit 106 can store aircraft identification (ID) information (e.g., tail number stamps), along with software instructions, algorithms, and models that are executable by the processor 104 to generate one or more control signals 103 that control the operation of the data-enabled aircraft generator module 110. The controller memory unit 106 can also store various measured parameters indicated by the sensor output signals 111, which can be analysed and processed by the processor 104 to control the data-enabled aircraft generator module 110, e.g., the voltage regulator and/or the protective systems. In addition, the processor 104 can collect and/or compute on-wing event data (e.g., operational and performance metrics data associated with various aircraft systems and components) and store the on-wing event data in the generator memory unit 112.

In one or more non-limiting embodiments, the processor 104 can utilize one or more measured parameters indicated by the sensor output signals 111 to detect one or more faults occurring in the data-enabled aircraft generator module 110 (e.g., in the generator 115). The faults include, but are not limited to, overvoltage faults, undervoltage faults, short-circuit faults, open-circuit faults, overheating events, rotor/stator imbalance, bearing wear, phase imbalance, frequency imbalance, and voltage regulator failure.

With continued reference to FIG. 1, the GCU 102 includes a GCU interface 108, which facilitates signal communication between the processor 104 and the generator memory unit 112. According to a non-limiting embodiment, a low-power data communication connection 101 can be established between the GCU interface 108 and the memory interface 114. The low-power data communication connection 101 can be established, for example, using one or more wires that electrically connects together the GCU interface 108 and the memory interface 114. In this manner, the processor 104 and the generator memory unit 112 can exchange data between one another, i.e., establish bi-directional data exchange.

The processor 104 can determine performance metrics during a flight of the aircraft 100 (e.g., based on real-time computations and/or the measured parameters indicated by the sensor output signals 111), and store the performance metrics in the generator memory unit 112. According to a non-limiting embodiment, the GCU 102 can detect the occurrence of a fault in the data-enabled aircraft generator module 110, and store fault data indicative of the detected fault in the generator memory unit 112. In some non-limiting embodiments, another controller or system can detect a fault, and relay fault data indicative of the fault to the GCU. The GCU 102 can then store the fault data in the generator memory unit 112. In one or more non-limiting embodiments, the processor 104 can combine aircraft ID information (e.g., a tail number) stored in the GCU memory unit 106 with the fault data and then store the combined data in the generator memory unit 112. In one or more non-limiting embodiments, data from on-wing events written into the generator memory unit by the GCU 102 during a flight of the aircraft 100 can trigger one or more repair actions as needed.

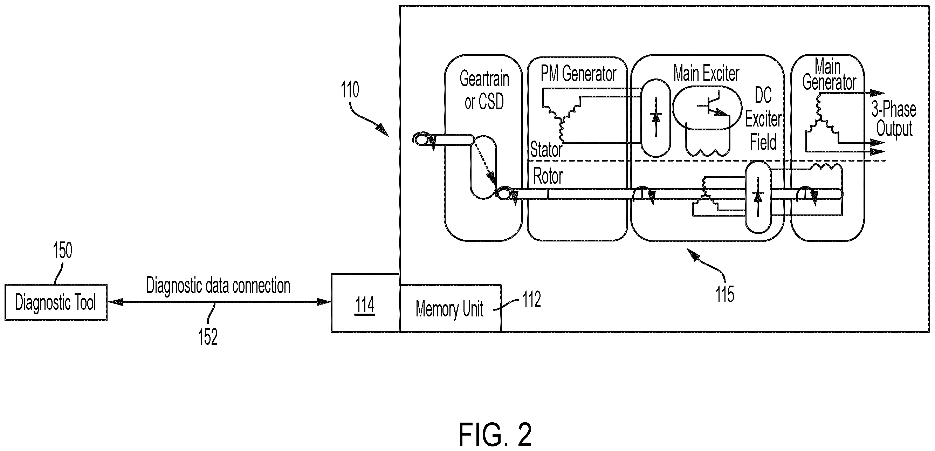

Turning now to FIG. 2, the data-enabled aircraft generator module 110 is illustrated in signal communication with a diagnostic tool 150. A diagnostic data connection 152 can be established by connecting a wired connector between the diagnostic tool 150 and the memory interface 114. In some non-limiting embodiments, the diagnostic data connection 152 can be achieved by establishing a wireless data connection between the diagnostic tool and the generator memory unit 112. According to a non-limiting embodiment, the diagnostic data connection 152 can be established while the aircraft generator module 110 is removed from the aircraft. The diagnostic tool 150 can include a stationary diagnostic tool 150 such as a workstation, or various mobile diagnostic tools 152 such as mobile terminal devices, mobile computer workstations, laptop computers, smart devices and/or or diagnostic tools operated by a maintenance technician. In this manner, the diagnostic tool 150 can be operated by a maintenance technician performing maintenance and diagnostics at a location remotely located from the GCU 102 and the aircraft (e.g., shown in FIG. 1).

The diagnostic tool 150 and the generator memory unit 112 can exchange data between one another via the diagnostic data connection 152. Accordingly, diagnostic tool 150 can access the generator memory unit 112 to obtain (e.g., read) ID information (e.g., part number and/or serial number) associated with the data-enabled aircraft generator module 110, ID information (e.g., part number and/or serial number) associated with the GCU 102 most recently controlling the generator module 110, ID information (e.g., tail number) associated with the aircraft most recently operated by the generator module 110, previous maintenance and diagnostic data, aircraft flight history data, and on-wing event data. Accordingly, the data-enabled aircraft generator module 110 can be removed from the aircraft and serviced at a remote location but can still provide information pertaining to generator module 110 and/or fault data from the generator memory unit 112 to assist in maintenance, diagnostics and/or repair.

According to a non-limiting embodiment, the diagnostic tool 150 can access the generator memory unit 112 to store (e.g., write) maintenance data thereto. The maintenance data includes, but is not limited to, generator ID information (e.g., part numbers and/or serial numbers), generator production information (e.g., month/year the generator was manufactured and/or placed in production), maintenance work data (e.g., the type of maintenance performed on the generator module 110), and maintenance dates and times, and historical diagnostic data. In one or more non-limiting embodiments, the generator memory unit 112 can serve as a digital-logbook when performing maintenance work on the data-enabled aircraft generator module 110.

In one or more non-limiting embodiments, a faulty data-enabled aircraft generator module 110 can be replaced with a new or non-faulty data-enabled aircraft generator module 110, and the generator ID information can be stored in the generator memory unit 112. The generator ID information stored in the generator memory unit 112 can also be used to update a GCU. For example, when the replaced generator memory unit 112 is installed in the aircraft 100 and connected to the GCU 102 (see FIG. 1), the GCU 102 can obtain the generator ID information from the generator memory unit 112 and determine a new or different data-enabled aircraft generator module 110 has been installed based on a difference between the previous generator ID information and the current generator ID information.

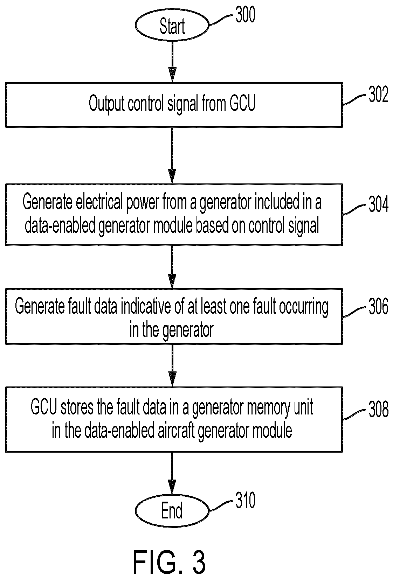

Turning now to FIG. 3, a method of exchanging data using a data-enabled aircraft generator module is illustrated according to a non-limiting embodiment of the present disclosure. The method begins at operation 300, and at operation 302 one or more control signals are output from a GCU. At operation 304, electrical power is generated by a generator included in a data-enabled generator module based at least in part on one or more of the control signals output from the GCU. At operation 306, fault data is generated in response to a fault occurring in the generator. According to a non-limiting embodiment, the GCU can detect the fault based on parameters associated with the generator and can generate the fault data in response to detecting the fault. At operation 308, the GCU stores the fault data in a generator memory unit installed locally in the data-enabled generator module, and the method ends at operation 310.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A data-enabled aircraft generator module comprising:
a generator (115) configured to power an aircraft based at least in part on at least one control signal output from a generator control unit, GCU (102); and
a generator memory unit (112) configured to exchange data with the GCU (102).

2. The data-enabled aircraft generator module of claim 1, wherein the generator memory unit (112) includes one or both of non-volatile memory (NVM) and Static Random-Access Memory (SRAM).

3. The data-enabled aircraft generator module of claim 1 or 2, further comprising a memory interface in signal communication with the generator memory unit (112), the memory interface configured to establish a data communication connection between the generator memory unit (112) and the GCU (102) to exchange the data.

4. The data-enabled aircraft generator module of claim 3, wherein the generator memory unit (112) is configured to store performance metrics output from the GCU (102) during a flight of the aircraft.

5. The data-enabled aircraft generator module of claim 4, wherein the generator memory unit (112) is configured to store fault data output from the GCU (102), the fault data indicative of at least one fault occurring in the generator.

6. The data-enabled aircraft generator module of claim 5, wherein at least one fault includes one or a combination of an overvoltage fault, an undervoltage fault, a short-circuit fault, an open-circuit fault, an overheating event, a rotor/stator imbalance, bearing wear, a phase imbalance, a frequency imbalance, and a voltage regulator failure; and/or wherein the generator memory unit (112) is configured to store aircraft identification data output from the GCU (102).

7. The data-enabled aircraft generator module of claim 3, further comprising at least one sensor configured to output at least one signal indicative of at least one measured parameter corresponding to the generator.

8. The data-enabled aircraft generator module of claim 4, wherein the at least one measured parameter includes at least one of voltage level output, current level output, voltage output frequency, voltage output phase, component temperatures, fluid temperatures, load ratings, and rotational speed.

9. The data-enabled aircraft generator module of claim 6, wherein the memory interface is configured to establish a diagnostic data communication connection between the generator memory unit (112) and a mobile diagnostic tool.

10. The data-enabled aircraft generator module of claim 9, wherein the generator memory unit (112) is configured to output one or a combination of the performance metrics, the fault data, and the aircraft identification data to the mobile diagnostic tool; and/or wherein the generator memory unit (112) is configured to store maintenance data received from the mobile diagnostic tool, and optionally wherein the maintenance data includes one or a combination of generator identification information, generator production information, maintenance work data, maintenance date and time information, and historical diagnostic data.

11. An aircraft comprising:
a generator control unit, GCU (102), configured to output at least one control signal;
a data-enabled aircraft generator module, as claimed in claim 1.

12. The aircraft of claim 11, wherein the generator memory unit (112) includes one or both of non-volatile memory (NVM) and Static Random-Access Memory (SRAM).

13. The aircraft of claim 11 or 12, wherein the GCU (102) is configured to determine at least one performance metric of the aircraft and to store the at least one performance metric in the generator memory unit (112), and optionally wherein the GCU (102) is configured to generate fault data indicative of at least one fault occurring in the generator, and is configured to store the fault data in the generator memory unit (112), and optionally wherein the GCU (102) is configured to store aircraft identification data associated with the aircraft in the generator memory unit (112).

14. The aircraft of claim 11, 12 or 13, further comprising at least one sensor in signal communication with the GCU (102), wherein the at least one sensor is configured to output at least one signal indicative of at least one measured parameter corresponding to the generator, and wherein the GCU (102) is configured to store the at least one measured parameter in the generator memory unit (112).

15. A method of exchanging data using a data-enabled aircraft generator module, the method comprising:
outputting, by a generator control unit, GCU (102), at least one control signal;
generating electrical power from a generator included in the data-enabled aircraft generator module based at least in part on the at least one control signal; and
generating fault data indicative of at least one fault occurring in the generator; and
storing the fault data in a generator memory unit (112) installed locally in the data-enabled aircraft generator module.
